(19) Europäisches Patentamt / European Patent Office / Office européen des brevets

(11) **EP 4 697 176 A1**

(12) **EUROPÄISCHE PATENTANMELDUNG**

(43) Veröffentlichungstag:
**18.02.2026   Patentblatt 2026/08**

(21) Anmeldenummer: **24194655.7**

(22) Anmeldetag: **14.08.2024**

(51) Internationale Patentklassifikation (IPC):
*G06F 11/30* *(2006.01)*

(52) Gemeinsame Patentklassifikation (CPC):
**G06F 11/3062**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Siemens Aktiengesellschaft**
**80333 München (DE)**

(72) Erfinder: **Die Erfindernennung liegt noch nicht vor**

(74) Vertreter: **Siemens Patent Attorneys**
**Postfach 22 16 34**
**80506 München (DE)**

(54) **VERFAHREN ZUR BEWERTUNG EINER SOFTWARE**

(57)    Die Erfindung betrifft eine Bewertung einer Software SW basierend auf einem durch Ausführung der Software SW mit einem Computersystem HW bewirkten Energieverbrauch. Die Ermittlung des Energieverbrauchs E(HW;SW) erfolgt modellbasiert anhand eines für das Computersystem HW spezifischen Energiemodells MODE(HW) und basierend auf einer oder mehreren Prozessmessgrößen PROC(HW;SW;i), welche aus einer Ausführung der Software SW auf dem Computersystem HW resultieren. Das Energiemodell MODE(HW) ist derart vorab bestimmt, dass es als Reaktion auf eine Eingabe der Prozessmessgrößen PROC(HW;SW;i) den Energieverbrauch E(HW;SW) ausgibt.

FIG 2

Processed by Luminess, 75001 PARIS (FR)

EP 4 697 176 A1

# EP 4 697 176 A1

**Beschreibung**

Die Erfindung betrifft die Bewertung einer Software mit Blick auf einen optimalen Energieverbrauch bei deren Ausführung mit einem Computersystem.

Vor dem Hintergrund der Nachhaltigkeit in der Entwicklung und Nutzung von Software SW besteht ein dringender Bedarf, die Ausführung einer Software hinsichtlich des Energieverbrauchs zu optimieren. Hierzu wird die betroffene Software hinsichtlich des Energieverbrauchs bewertet, der bei der Ausführung der Software SW auf einem bestimmten Computersystem HW auftritt. Eine dedizierte Messung des Energieverbrauchs bei der Ausführung der Software ist jedoch äußerst aufwändig - zum einen aufgrund der jeweiligen Energiemessung an sich und zum anderen, da letztlich für jedes betroffene Computersystem, d.h. für jeden Gerätetypen, separat eine solche Energiemessung auszuführen ist. Hinzu kommt, dass derartige Energiemessungen nach Änderungen der Software erneut ausgeführt werden müssen.

Bisherige Lösungen sehen bspw. vor, klassische Performanceoptimierungen durchzuführen, da eine Optimierung der Performance meist auch zu einer Reduzierung des Energieverbrauches führt. Dies kann aber zu einer schnellen Lösung mit höherem Energieverbrauch führen.

Ein weiterer Ansatz besteht in einer Energieoptimierung auf Basis von Energie- bzw. Leistungsmessungen, bspw. mittels entsprechender Messsteckdosen zur Bestimmung des Gesamtenergieverbrauches oder mittels hardwarebasierter Energie- bzw. Leistungsmessungen der wichtigsten Komponenten des betroffenen Computersystems. Dabei kann es ausreichend sein, nicht das Gesamtsystem zu betrachten und die Energieoptimierung auf Basis prozessorintegrierter Energiemessungen umzusetzen, bspw. RAPL bei x86 CPUs und NVML bei Nvidia GPUs. Nichtsdestotrotz ist dies jedoch wiederum mit hohem Aufwand verbunden und für eine größere Geräteanzahl nicht praktikabel, da bei jeder Iteration erneut an der Messsteckdose gemessen werden muss.

In jedem Fall muss bei den bekannten Ansätzen für jede Software bzw. jede Softwareversion und für jeden Gerätetypen separat gemessen werden, was wiederum den Aufwand drastisch erhöht.

Es ist daher eine Aufgabe der vorliegenden Erfindung, einen praktikablen, wenig aufwändigen Ansatz zur Bewertung einer Software basierend auf deren Energieverbrauch aufzuzeigen. Diese Aufgabe wird durch das in Anspruch 1 beschriebene Verfahren gelöst. Unteransprüche beschreiben vorteilhafte Ausgestaltungen.

Beim hier vorgeschlagenen computerimplementierten Verfahren wird zur Bewertung einer Software SW ein bei einer Ausführung der Software SW durch ein bestimmtes Computersystem HW1 aus einer Anzahl H≥1 von Computersystemen HWh mit h=1,...,H zu erwartender Energieverbrauch E(HW1;SW) ermittelt und ausgegeben. Dabei erfolgt die Ermittlung des Energieverbrauchs E(HW1;SW) modellbasiert, d.h. insbesondere auch ohne eine unmittelbare Messung der Energie an sich, anhand eines für das bestimmte Computersystem HW1 spezifischen Energiemodells MODE(HW1) und basierend auf einer oder mehreren Prozessmessgrößen PROC(HW1;SW;i) mit i=1,... ,I, welche ihrerseits aus einer Ausführung der Software SW auf dem Computersystem HW1 resultieren, wobei die Prozessmessgrößen als Eingangswerte IN für das Energiemodell MODE(HW1) verwendet werden und I die Anzahl der verwendeten Prozessmessgrößen beschreibt. Das Energiemodell MODE(HW1) ist derart vorab bestimmt, dass es als Reaktion auf eine Eingabe der Prozessmessgrößen PROC(HW1;SW;i) den Energieverbrauch E(HW1;SV$\eta$ ausgibt.

Ein "Computersystem" HWh kann letztlich jede Art von computerbasierter Hardware sein, die typischerweise zumindest einen Prozessor und zumindest einen Speicher umfasst und die ausgebildet ist, eine Software auszuführen. Zwei Computersysteme HW1, HW2 unterscheiden sich dabei jedoch nicht darin, dass es zwei verschiedene Geräte desselben Typs sind, d.h. mit einem Computersystem HW1 ist hier nicht ein bestimmter Computer gemeint. Vielmehr sollen unterschiedliche Computersysteme verschiedene Gerätetypen oder Geräteklassen repräsentieren. So kann ein erstes Computersystem HW1 bspw. den Gerätetyp "iphone 15" repräsentieren, während ein zweites Computersystem HW2 bspw. den Gerätetyp "Samsung Galaxy S24" repräsentiert. Ein drittes Computersystem HW3 kann bspw. einen bestimmten Typen von Edge-Geräten repräsentieren. Bei dieser exemplarischen Auswahl ist jedoch nicht gemeint, dass das erste Computersystem "iphone 15" ein konkretes Gerät ist, bspw. identifizierbar anhand einer der Seriennummer.

Die Prozessmessgrößen PROC(HWh;SW;i) können Messgrößen sein, die Häufigkeiten von Operationen des jeweiligen Computersystems HWh und/oder Betriebszustände, bspw. Auslastungen, von Komponenten des jeweiligen Computersystems HWh bei der Ausführung der Software SW repräsentieren und wie bereits angemerkt keine gemessenen Energien. Diese Messgrößen können bspw. Performanceevents bzw. Events sein, die Wechselwirkungen im Computersystem HWh darstellen, bspw. Häufigkeiten von Operationen in den Recheneinheiten oder Zugriffe auf Speicher des Computersystems. Wechselwirkungen können sich bspw. auch in Form von Nachladungen von Daten in den oder aus einem Speicher zeigen. Ein Betriebszustand kann bspw. eine Auslastung der CPU in % bei der Ausführung der Software sein oder auch eine CPU-Taktfrequenz. Grundsätzlich können auch abstraktere Größen wie bspw. die Regularität oder Lokalität von Speicherzugriffen verwendet werden. Hinsichtlich der Häufigkeiten können neben Performance-Countern auch Auslastungs- oder Nutzungsmetriken verwendet werden.

Gemäß einem ersten Aspekt der Erfindung kann zur Ermittlung des Energieverbrauchs E(HWh;SW) die gegebene Software SW zur Bestimmung der Prozessmessgrößen PROC(HWh;SW;i) in einem Schritt S_EXE1 zunächst auf bzw. mit dem jeweiligen Computersystem HWh instrumentiert werden, d.h. man bestimmt die Prozessmessgrößen bei Ausführung der Software SW. Die so bestimmten Prozessmessgrößen PROC(HWh;SW;i) können dem Energiemodell MODE(HWh) in einem Schritt S_22 als Eingangswerte zugeführt werden. Das Energiemodell MODE(HWh) kann daraufhin als Reaktion auf die Eingangswerte PROC(HWh;SW;i) in einem Schritt S_CAL1 eine Energieaussage erzeugen und ausgeben, welche repräsentiert, wie groß der Energieverbrauch E(HWh;SW) des Computersystems HWh bei der Ausführung der Software SW ist. Dieser erste Aspekt der Erfindung erlaubt konsequenterweise, für eine Hardware HWh, deren Energiemodell MODE(HWh) bekannt ist, für eine beliebige Software SW allein mittels der Messung der Prozessmessgrößen PROC(HWh;SW;i) den zu erwartenden Energieverbrauch E(HWh;SW) zu ermitteln, ohne den Energieverbrauch direkt messen zu müssen.

Gemäß einem zweiten Aspekt der Erfindung wird davon ausgegangen, dass für eine Vielzahl H>1 von Computersystemen HWh die Energiemodelle MODE(HWh) bekannt sind. Gemäß dem zweiten Aspekt kann zur Ermittlung des Energieverbrauchs E(HW2;SW), der bei Ausführung der gegebenen Software SW mit einem zweiten HW2 dieser Computersysteme HWh zu erwarten ist, in einem ersten Schritt S_EXE2 die gegebene Software SW zur Bestimmung der Prozessmessgrößen PROC(HW1;SW;i) zunächst auf bzw. mit einem ersten HW1 der Computersysteme HWh instrumentiert werden, d.h. man bestimmt die Prozessmessgrößen PROC(HW1;SW;i) bei Ausführung der Software SW mit dem ersten Computersystem HW1. In einem zweiten Schritt S_22 können die so bestimmten Prozessmessgrößen PROC(HW1;SW;i) dem Energiemodell MODE(HW2) des zweiten Computersystems HW2 als Eingangswerte IN=PROC(HW1;SW;i) zugeführt werden, bevor das Energiemodell MODE(HW2) des zweiten Computersystems HW2 als Reaktion auf diese Eingangswerte IN in einem dritten Schritt S_CAL2 eine Energieaussage erzeugt und ausgibt. Diese Energieaussage repräsentiert wiederum, wie groß der Energieverbrauch E(HW2;SW) des zweiten Computersystems HW2 bei der Ausführung der Software SW ist. Dieser zweite Aspekt der Erfindung adressiert also das Vorgehen, bei dem die Software SW, deren zu erwartender Energieverbrauch E(HW2;SW) auf dem zweiten Computersystem HW2 ermittelt werden soll, auf dem quasi als Referenzsystem oder auch als Prüfstand fungierenden ersten Computersystem HW1 instrumentiert wird. E(HW2;SW) wird dann bestimmt, indem die resultierenden Prozessmessgrößen PROC(HW1;SW;i) dem Energiemodell MODE(HW2) des zweiten Computersystems HW2 zugeführt werden. Mit diesem Ansatz kann also für ein beliebiges Computersystem HW2 aus der Vielzahl H von Computersystemen HWh, deren Energiemodelle bekannt sind, eine Energievorhersage getroffen werden, die angibt, welcher Energieverbrauch die Ausführung der SW auf diesem beliebigen Computersysteme HW2 bewirken würde, ohne dass die Software SW auf dem jeweiligen Computersystem HW2 selbst instrumentiert wird.

Dabei können optional die im ersten Schritt S_21 bestimmten Prozessmessgrößen PROC(HW1 ;SW;i) vor der Ausführung des zweiten Schrittes anhand einer vorab bestimmten Modellierung ML(HW1;HW2;i) resultierend in Prozessmessgrößen PROC'(HW1;SW;i) angepasst werden. Die Modellierung ML(HW1;HW2;i) beschreibt, wie sich die Prozessmessgrößen PROC(HW1;i), PROC(HW2;i) für verschiedene Computersysteme HW1, HW2 zueinander verhalten. Im zweiten Schritt S_22 können die angepassten Prozessmessgrößen PROC'(HW1;SW;i) dem Energiemodell MODE(HW2) als Eingangswerte IN=PROC'(HW1 ;SW;i) zugeführt werden, bevor im dritten Schritt S_23 das Energiemodell MODE(HW2) des zweiten Computersystems HW2 als Reaktion auf diese Eingangswerte IN die Energieaussage erzeugen und ausgeben kann, welche repräsentiert, wie groß der Energieverbrauch E(HW2;SW) des zweiten Computersystems HW2 bei der Ausführung der Software SW ist. Diese optionale Ausbildung trägt der Eventualität Rechnung, dass nicht grundsätzlich ausgeschlossen sein muss, dass bei der Ausführung derselben Software SW auf unterschiedlichen Computersystemen HW1, HW2 unterschiedliche Prozessmessgrößen PROC(HW1;SW;i)#PROC(HW2;SW;i) bewirkt werden. Die Abweichung der Prozessmessgrößen voneinander wird durch die ML(HW1;HW2;i) kompensiert.

Für die Modellierung ML(HW1;HW2;i) können im Rahmen der im Folgenden beschriebenen Ermittlung der Energiemodelle MODE(HW1), MODE(HW2) für jedes i die bei der Ermittlung der Energiemodelle MODE(HW1), MODE(HW2) ermittelten Prozessmessgrößen PROC(HW(1);i), PROC(HW2;i) miteinander verglichen werden, so dass gilt ein jeweiliger Wert ML(HW1 ;HW2;i) eine Funktion f der ermittelten Prozessmessgrößen ist, d.h. ML(HW1;HW2;i) =f(PROC(HW1;i);PROC(HW2;i)), wobei für einen jeweiligen Wert ML(HW1;HW2;i) bspw. gelten kann ML(HW1;HW2;i) =PROC(HW1;i)/PROC(HW2;i).

Der Begriff "Instrumentierung" meint, dass bei der Instrumentierung der Software SW auf einem jeweiligen Computersystem HWh die Software SW mit dem Computersystem HWh ausgeführt wird und dabei die Prozessmessgrößen PROC(HWh;SW;i) ermittelt werden, bspw. durch Messung. Hier und im Folgenden meinen die Ausdrücke "Ermittlung" oder "Bestimmung" einer Prozessmessgröße, dass für die jeweilige Prozessmessgröße ein entsprechender Messwert ermittelt oder bestimmt wird.

Das Energiemodell MODE(HWh) für ein jeweiliges Computersystem HWh kann vorab ermittelt werden, indem ein Benchmark BEN umfassend eine oder mehrere Benchmarkmessungen BEN(b) mit dem jeweiligen Computersystem HWh ausgeführt wird. Bei einer jeden Benchmarkmessung BEN(b) kann dabei der jeweils aufgewendete Energieverbrauch E(b) gemessen. Außerdem können jeweils zumindest die von der jeweiligen Benchmarkmessung BEN(b) betroffenen Messgrößen PROC(HWh;i(b)) der Prozessmessgrößen PROC(HWh;i) des Computersystems HWh ermittelt werden. Die damit ermittelten Zusammenhänge zwischen den betroffenen Prozessmessgrößen PROC(HWh;i(b)) und den Energieverbräuchen E(b) können schließlich das Energiemodell MODE(HWh) bilden.

Hierbei kann eine BEN(1) der Benchmarkmessungen BEN(j) bspw. ein blockweises Kopieren unterschiedlich großer Datenmengen umfassen, woraus ein Energieverbrauch E(1) für Hauptspeicher- und Datencache-Zugriffe bei Cache-Hits ableitbar ist. Zusätzlich oder alternativ kann eine BEN(2) der Benchmarkmessungen BEN(j) ein byteweises Kopieren durch Pseudozufallszahlen ausgewählter Speicheradressen umfassen, woraus ein Energieverbrauch E(2) für Datencache-Zugriff bei Cache-Misses ableitbar ist. Zusätzlich oder alternativ kann eine BEN(3) der Benchmarkmessungen BEN(j) eine Berechnung eines kryptografischen Hashes von Pseudozufallsdaten umfassen, woraus ein Energieverbrauch E(3) von derartigen Berechnungen ableitbar ist. Zusätzlich oder alternativ kann eine BEN(4) der Benchmarkmessungen BEN(j) eine Berechnung eines gleitenden Mittelwerts und/oder eines Produkts umfassen, woraus ein Energieverbrauch E(5) aufgeschlüsselt nach Art der Operation, bspw. Addition oder Multiplikation, oder nach dem Zahlenformat, bspw. integer oder floating point, ableitbar ist. Zusätzlich oder alternativ kann eine BEN(5) der Benchmarkmessungen BEN(j) Berechnungen mittels einer GPU des Computersystems HW umfassen, woraus ein Energieverbrauch E(5) für eine Beschleunigerkarte des Computersystems HW ableitbar ist. Zusätzlich oder alternativ kann eine BEN(6) der Benchmarkmessungen BEN(j) ein Speichern und Laden von Daten auf und/oder von einer Speichereinrichtung (120) des Computersystems HW umfassen, woraus ein Energieverbrauch E(6) für einen Zugriff auf die Speichereinrichtung ableitbar ist. Zusätzlich oder alternativ kann eine BEN(7) der Benchmarkmessungen BEN(j) ein Senden und/oder Empfangen von Daten über ein Netzwerk umfassen, mit dem das Computersystem HW verbunden ist, woraus ein Energieverbrauch E(7) für Datenübertragungen ableitbar ist.

Weitere Benchmarkmessungen BEN(j) können für den Fall, dass externe Sensorik oder Eingabegeräte vorhanden sind, weitere Belastungstests jeweils bei gleichzeitiger Messung der Energieverbräuche E(j) umfassen.

In einer Testphase S_TST der Software SW kann für mehrere Computersysteme HW1, HW2, HW3 jeweils der bei der Ausführung der gegebenen Software SW zu erwartende Energieverbrauch E(HW1;SW), E(HW2;SW), E(HW3;SW) wie oben beschrieben ermittelt und ausgegeben werden. Anschließend kann die Software SW in einer Nutzungsphase S_NTZ der Software SW mit demjenigen der Computersysteme HW1, HW2, HW3 ausgeführt werden, für das in der Testphase S_TST der geringste zu erwartende Energieverbrauch E(HW1;SW), E(HW2;SW), E(HW3;SW) ermittelt wurde. In dieser Anwendung kann der Energieverbrauch bei Ausführung der Software dadurch reduziert bzw. optimiert werden, dass sie auf demjenigen Computersystem ausgeführt wird, für welches der geringste Energieverbrauch vorhergesagt wird.

Eine Computerarchitektur umfassend eine Vielzahl H von Computersystemen HWh mit h=1,... ,H und H≥2, die jeweils zur Ausführung der Software SW geeignet sind, kann eingerichtet sein, wie oben beschrieben dasjenige HWh' der Computersysteme HWh zu identifizieren, für das der geringste Energieverbrauch E(HW1;SW), E(HW2;SW), ... zu erwarten ist, und die Software SW mit dem so identifizierten Computersystem HWh' auszuführen. Damit wird also gewährleistet, dass die gegebene Software bei minimalem Energieverbrauch genutzt werden kann.

Die Software SW kann desweiteren für ein jeweiliges Computersystem HWh unter Berücksichtigung des entsprechenden Energiemodells für MODE(HWh) dahingehend optimiert werden, dass eine Ausführung der Software SW mit dem Computersystem HWh einen minimalen Energieverbrauch E(HWh;SW) bewirkt. Für den Fall, dass die Software mit mehreren Computersystemen HW1,... HWN ausgeführt werden soll, kann die Software für diese Vielzahl von Computersystemen HW1,...,HWN unter Berücksichtigung der Energiemodelle MODE(HW1),...,MODE(HWN) dieser Computersysteme HW1,...,HWN dahingehend optimiert werden, dass eine Ausführung der Software SW mit den Computersystemen HW1,...,HWN einen minimalen Gesamtenergieverbrauch EGES bewirkt, wobei der Gesamtenergieverbrauch EGES die Summe der Energieverbräuche E(HW1;SW),...,E(HWN;SW) der einzelnen Computersysteme HW1,...,HWN ist. In diesen Anwendungen wird nicht bzw. nicht nur das ausführende Computersystem ausgewählt, sondern die Software SW selbst wird optimiert, insbesondere bezüglich deren Ausführung mit dem Computersystem HW, um den Energieverbrauch zu reduzieren. Dies macht sich zunutze, dass die Einflüsse der Prozessmessgrößen auf den Energieverbrauch aus dem Energiemodell MODE(HW) bekannt sind.

Zur Optimierung kann zunächst die Software SW zur Bestimmung der Prozessmessgrößen PROC(HWh;SW;i) für die Ausführung der Software SW mit dem Computersystem HWh auf dem Computersystem HWh instrumentiert werden. Im Anschluss daran kann eine Abhängigkeit Z1 der Prozessmessgrößen PROC(HWh;SW;i) von der Software SW abgeleitet werden. Aus dem Energiemodell MODE(HWh) kann eine weitere Abhängigkeit Z2 zwischen Prozessmessgrößen PROC(HWh;i), bspw. aus dem Benchmark, und Energieverbrauch und damit der Einfluss der Prozessmessgrößen PROC(HWh;i) auf den Energieverbrauch des Computersystems HWh abgeleitet werden. Aus den Abhängigkeiten Z1, Z2 kann weiterhin eine Abhängigkeit Z0 des Energieverbrauchs E(HWh;SW) von der Software SW abgeleitet werden. Die Software SW kann daraufhin basierend auf der Abhängigkeit Z0 dahingehend optimiert werden, dass der Energieverbrauch E(HWh;SW) minimal wird. Dies macht sich zunutze, dass aus der Abhängigkeit Z1 bekannt ist, wie die Prozessmessgrößen PROC mit der Software zusammenhängen, während die Abhängigkeit Z2 beschreibt, wie die Prozessmessgrößen PROC und der Energieverbrauch E zusammenhängen. Demnach ist bekannt, welchen Einfluss die einzelnen Prozessmessgrößen PROC auf den Energieverbrauch E haben und welchen Einfluss die Software SW auf die Prozessmessgrößen PROC hat. Darauf aufbauend können zunächst die zur Erreichung eines minimalen Energieverbrauchs E(min) notwendigen Prozessmessgrößen PROC(min) abgeleitet werden. Mit Hilfe der Abhängigkeit Z1 kann dann ermittelt werden, wie die Software ggf. anzupassen ist, um PROC(min) zu erreichen.

Dabei kann die Abhängigkeit Z2 unter Verwendung der Daten der Benchmarkmessungen BEN(j) bestimmt werden, wobei die Abhängigkeit Z2 aus den bei den Benchmarkmessungen BEN(j) aufgenommenen Prozessmessgrößen PROC(HWh;i(j)) und den jeweiligen Energieverbräuchen E(j) abgeleitet werden kann.

Die so für das Computersystem HWh optimierte Software SW kann auf dem betroffenen Computersystem HWh installiert und ausgeführt werden, so dass minimaler Energieverbrauch bei Ausführung der Software gewährleistet ist.

Die Lösung der Aufgabe baut auf einen Plattformansatz, der auf die Energie und bspw. nicht die Performance bzw. Schnelligkeit abzielt und die Energiebestimmung und -optimierung für verschiedene Computersysteme bzw. Gerätemodelle ermöglicht, ohne dass auf diesen Geräten gemessen werden muss, d.h. es ist eine cross-device Energiebestimmung möglich. Dies eröffnet diverse Vorteile: Bspw. wird bei geringem Aufwand eine gleichzeitige Optimierung für eine Familie von Gerätemodellen erreicht. Das Verfahren ist automatisierbar und in den CI/CD-Prozess der Softwareentwicklung integrierbar. Desweiteren können ohne größeren Aufwand auch nachträglich weitere Gerätemodelle bzw. Computersysteme hinzugenommen werden, indem deren Energiemodelle MODE ermittelt werden. Auch kann das Verfahren auf Gerätemodelle mit unterschiedlichen Prozessoren, Netzwerkinterfaces, Haupt- und Massenspeichertypen ausgeweitet werden.

Weitere Vorteile und Ausführungsformen ergeben sich aus den Zeichnungen und der entsprechenden Beschreibung.

Im Folgenden werden die Erfindung und beispielhafte Ausführungsformen anhand von Zeichnungen näher erläutert. Dort werden gleiche Komponenten in verschiedenen Figuren durch gleiche Bezugszeichen gekennzeichnet. Es ist daher möglich, dass sich bei der Beschreibung einer zweiten Figur zu einem bestimmten Bezugszeichen, welches bereits im Zusammenhang mit einer anderen, ersten Figur erläutert wurde, keine näheren Erläuterungen finden. In einem solchen Fall kann bei der Ausführungsform der zweiten Figur davon ausgegangen werden, dass die dort mit diesem Bezugszeichen gekennzeichnete Komponente auch ohne nähere Erläuterung im Zusammenhang mit der zweiten Figur die gleichen Eigenschaften und Funktionalitäten aufweist, wie im Zusammenhang mit der ersten Figur erläutert. Desweiteren werden der Übersichtlichkeit wegen teilweise nicht sämtliche Bezugszeichen in sämtlichen Figuren dargestellt, sondern nur diejenigen, auf die in der Beschreibung der jeweiligen Figur Bezug genommen wird.

Es zeigen:

FIG 1    eine Vielzahl von Computersystemen,
FIG 2    ein Verfahren zur Bestimmung eines Energieverbrauchs gemäß einem ersten Aspekt der Erfindung,
FIG 3    ein Verfahren zur Bestimmung eines Energieverbrauchs gemäß einem zweiten Aspekt der Erfindung,
FIG 4    ein Verfahren zur Bestimmung eines Energiemodells.

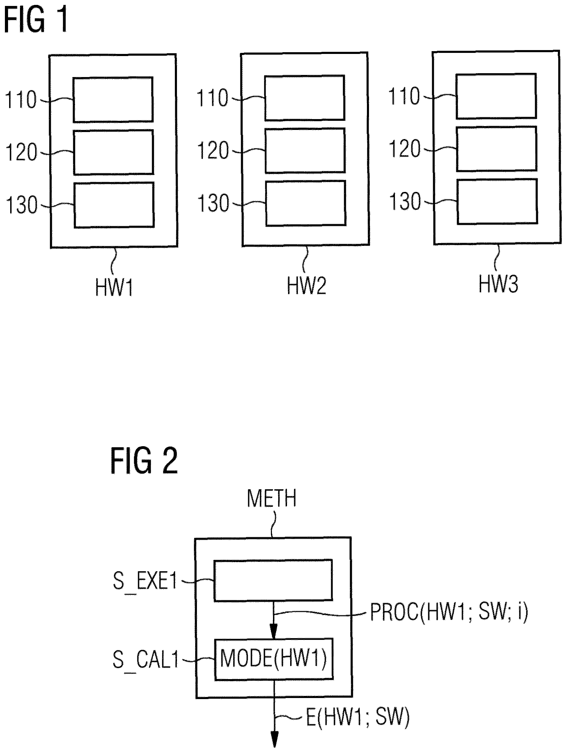

Die FIG 1 zeigt eine Computerarchitektur 100 mit einer Vielzahl von Computersystemen HW1, HW2, HW3. Jedes der Computersysteme HW1, HW2, HW3 weist eine Recheneinrichtung 110, bspw. jeweils umfassend einen oder mehrere Prozessoren, eine Speichereinrichtung 120 sowie sonstige zum regelmäßigen Betrieb eines jeweiligen typischen Computersystems benötigte Komponenten 130 auf. Der Begriff der Recheneinrichtung 110 umfasst bspw. die übliche CPU, kann aber auch eine GPU meinen, je nachdem, auf welche Art von Recheneinrichtung bei der Ausführung einer Software SW eingebunden ist. Die Speichereinrichtungen 120 der Computersysteme HW1, HW2, HW2 können bspw. HDD- oder auch SSD-Festplatten oder andere gängige Typen von Speichereinrichtungen sein, bspw. RAM, welche Daten speichern, auf welche Daten zur Speicherung geschrieben werden können und von welchen Daten ausgelesen werden können. Auch dynamische Speicher wie bspw. DRAM können hier zum Einsatz kommen.

Jedes der Computersysteme HW1, HW2, HW3 ist in üblicher Weise eingerichtet, mittels der jeweiligen Recheneinrichtung 110 eine Software SW auszuführen, die bspw. in der jeweiligen Speichereinrichtung 120 abgelegt sein kann. Dabei erfolgen Rechenoperationen und Speicherzugriffe entsprechend den Vorgaben der Software SW. Weder die Recheneinrichtungen 110 noch die Speichereinrichtungen 120 der Computersysteme HW1, HW2, HW3 an sich müssen zum Zwecke der Erfindung besondere Eigenschaften aufweisen.

Jedes der Computersysteme HW1, HW2, HW3 kann jeweils letztlich jede Art von computerbasierter Hardware sein, die typischerweise zumindest einen Prozessor und zumindest einen Speicher umfasst und die ausgebildet ist, eine Software SW auszuführen, also bspw. ein Industriecomputer, ein Personalcomputer, ein Notebook, ein Laptop, ein Tabletcomputer, ein Smartphone sowie auch ein Edge-Gerät einer Netzwerkarchitektur oder ein ganzes Cloud-System. Desweiteren sollen Szenarien umfasst sein, bei denen mehrere vernetzte Computer verwendet werden und die SW verteilt ausgeführt wird. Ebenso kann jedes der Computersysteme HW1, HW2, HW3 aus der Domäne der Unterhaltungselektronik stammen und bspw. als Audio- und/oder Video-Gerät ausgebildet sein, d.h. als Fernseher, Kamera, Streamer etc.

Im Folgenden wird zur weiteren Erläuterung eines ersten und später eines zweiten Aspekts der Erfindung zunächst nur das Computersystem HW1 verwendet. Die Erläuterungen lassen sich aber ohne weiteres auf die anderen Computersysteme HW2, HW3 übertragen, da diese grundsätzlich gleichartig sind, indem sie jeweils Recheneinrichtung 110 und Speichereinrichtung 120 aufweisen und die Software SW ausführen können.

Die Ausführung der Software SW bewirkt, dass das Computersystem HW1 in unmittelbarer Abhängigkeit von der Software SW eine Vielzahl von verschiedenen Operationen umfassend Rechenoperationen seitens der Recheneinrichtung 110 sowie lesende und/oder schreibende Speicherzugriffe auf die Speichereinrichtung 120 ausführt. Die Speicherzugriffe können auch das Laden bzw. Speichern von einem Permanentspeicher in einen dynamischen Speicher umfassen. Jede der Operationen ist dabei mit einem Energieverbrauch verbunden, so dass die Ausführung der Software SW durch das Computersystem HW1 einen Gesamtenergieverbrauch E(HW1 ;SW) bewirkt.

Hinsichtlich der Nachhaltigkeit ist nun bspw. von Interesse, welcher Energieverbrauch durch die Ausführung der Software SW mit dem Computersystem HW1 bewirkt wird, um diesen letztendlich optimieren bzw. minimieren zu können. Um eine Optimierung zu erreichen, kann zum einen die Software SW selbst optimiert werden. Zum anderen kann, falls mehrere geeignete Computersysteme zur Ausführung der Software SW vorhanden sind, bspw. HW1, HW2 und HW3, die Software SW von demjenigen Computersystem HW1, HW2 oder ggf. HW3 ausgeführt werden, das den geringsten Energieverbrauch E(HW1;SW) bzw. E(HW2;SW) bzw. E(HW3;SW) verspricht. In beiden Szenarien ist zunächst zu ermitteln, wie groß der Energieverbrauch E(HW1;SW) bzw. ggf. E(HW2;SW) bzw. ggf. E(HW3;SW) jeweils ist. Die Ermittlung der Energieverbräuche durch Messung ist jedoch sehr aufwändig, weswegen sich der hier vorgeschlagene Ansatz als vorteilhaft herausstellt.

Wiederum lediglich bezogen auf das Computersystem HW1 und nach wie vor ohne weiteres übertragbar auf die anderen Computersysteme HW2, HW3 wird der Energieverbrauch E(HW1;SW) des die Software SW ausführenden Computersystems HW1 gemäß dem ersten und dem zweiten Aspekt der Erfindung nicht mittels direkter Energiemessungen, sondern modellbasiert bestimmt. Hierfür wird jeweils ein für das Computersystem HW1 spezifisches, vorab bestimmtes Energiemodell MODE(HW1) verwendet.

Um den Energieverbrauch E(HW1;SW) zu bestimmen, werden im Rahmen eines in der FIG 2 dargestellten Verfahrens METH bei der Ausführung der Software SW durch das Computersystem HW1 in einem Schritt S_EXE1 bestimmte Prozessmessgrößen PROC(HW1;SW;i) mit i=1,...,I ermittelt, wobei I für die Anzahl der verwendeten Prozessmessgrößen steht. Prozessmessgrößen PROC(HW1;SW;i) sind Messgrößen, die die Häufigkeiten von Operationen, bspw. Rechenoperationen und/oder Speicherzugriffe, Datenübertragungs-Operationen und eventuelle I/O-Operationen mit der Peripherie, und/oder Betriebszustände wie Auslastungen von verwendeten Komponenten des Computersystems HW1 bei der Ausführung der Software SW repräsentieren. Auch Abfolgen von Operationen in einer Pipeline sowie Lokalitäten von Zugriffsmustern können als Prozessmessgrößen eingehen. Grundsätzlich gilt, dass die Prozessmessgrößen keine unmittelbaren Energiemesswerte sind.

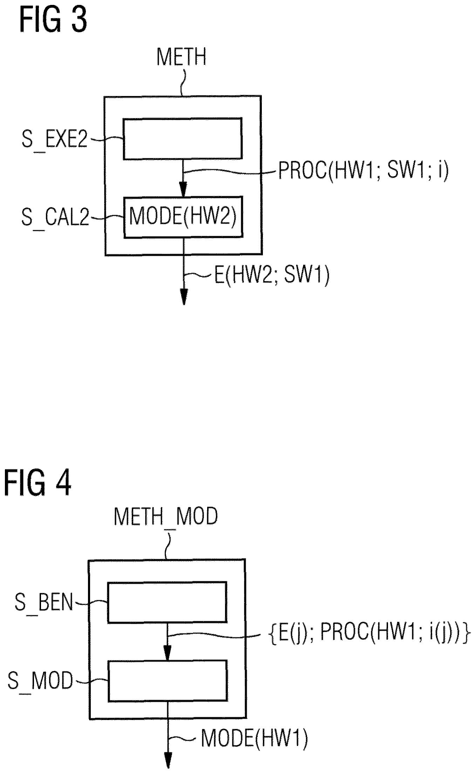

Die ermittelten Prozessmessgrößen PROC(HW1;SW;i) werden als Eingangswerte für das Energiemodell MODE(HW1) verwendet. Das Energiemodell MODE(HW1) ist seinerseits, wie später im Zusammenhang mit FIG 4 erläutert, derart vorab bestimmt, dass es als Reaktion auf die Eingabe der Prozessmessgrößen PROC(HW1;SW;i) den Energieverbrauch E(HW1;SW) ausgibt. Allgemein ausgedrückt beschreibt also ein Energiemodell MODE(HW) eines Computersystems HW den Zusammenhang zwischen Prozessmessgrößen PROC und Energieverbrauch E.

Zur Ermittlung des Energieverbrauchs E(HW1;SW) des Computersystems HW1 bei Ausführung der Software SW wird also im ersten Schritt S_EXE1 des Verfahrens METH die Software SW zur Bestimmung der Prozessmessgrößen PROC(HW1;SW;i) zunächst auf bzw. mit dem Computersystem HW1 instrumentiert, d.h. es werden die Prozessmessgrößen PROC(HW1;SW;i) ermittelt, d.h. die Häufigkeiten der Operationen und/oder die Auslastungen von Komponenten des Computersystems HW1. Der Begriff der "Instrumentierung" einer Software SW auf einem Computersystem HW umfasst demzufolge, dass die Software SW mit dem Computersystem HW ausgeführt wird und dabei die Prozessmessgrößen PROC(HW;SW;i) ermittelt werden.

Die so bestimmten Prozessmessgrößen PROC(HW1;SW;i) werden dem Energiemodell MODE(HW1) als Eingangswerte zugeführt. Das Energiemodell MODE(HW1) des Computersystems HW1 erzeugt in einem zweiten Schritt S_CAL1 des Verfahrens METH als Reaktion auf die Eingangswerte PROC(HW1;SW;i) eine Energieaussage, welche repräsentiert, wie groß der Energieverbrauch E(HW1;SW) der Hardware HW1 bei der Ausführung der Software SW ist.

Der bislang beschriebene Ansatz erlaubt entsprechend dem ersten Aspekt der Erfindung eine Energieaussage für eine beliebige Software SW bei deren Ausführung durch ein Computersystem HW1, dessen Energiemodell MODE(HW1) bekannt ist, ohne eine unmittelbare Energiemessung. Die Software SW wird lediglich im Schritt S_EXE1 auf dem Computersystem HW1 instrumentiert, d.h. im Idealfall einmal ausgeführt bei gleichzeitiger Ermittlung der Prozessmessgrößen PROC(HW1;SW;i). Basierend auf den Prozessmessgrößen PROC(HW1;SW;i) liefert das Energiemodell MODE(HW1) im Schritt S_CAL1 den Energieverbrauch E(HW1;SW). Wird im Schritt S_EXE1 eine andere Software SW2 mit dem Computersystem HW1 ausgeführt, so kann der entsprechende Energieverbrauch E(HW1;SW2) im Schritt S_CAL1 abgeschätzt werden, indem die Prozessmessgrößen PROC(HW1;SW2;i) Energiemodell MODE(HW1) zugeführt und dort prozessiert werden. Mit anderen Worten ist es also im bislang adressierten ersten Aspekt der Erfindung möglich, bei Kenntnis des Energiemodells MODE(HW1) des Computersystems HW1 den Energieverbrauch einer beliebigen Software SW anzugeben, sobald diese, resultierend in den entsprechenden Prozessmessgrößen PROC, instrumentiert ist.

Während also der erste Aspekt der Erfindung darauf abzielt, für verschiedene Software SWs mit s=1,...,S die entstehenden Energieverbräuche E(HW1;SWs) bei Ausführung mit einem bestimmten Computersystem HW1 bestimmen zu können, dessen Energiemodell MODE(HW1) bekannt ist, adressiert der zweite Aspekt der Erfindung das Szenario, dass für eine bestimmte Software SW1 bestimmt werden soll, welche Energieverbräuche E(HWh;SW1) zu erwarten sind, wenn sie auf verschiedenen Computersystemen HWh mit h=1,...,H ausgeführt wird. Es kann dabei wieder davon ausgegangen werden, dass die Energiemodelle MODE(HWh) der Computersysteme HWh bekannt sind.

Auch im Kontext des zweiten Aspekts der Erfindung, der in FIG 3 dargestellt ist, wird die bestimmte Software SW1 zunächst in einem Schritt S_EXE2 instrumentiert, wobei hierzu ein beliebiges der Computersysteme HWh genutzt werden kann, bspw. HW1. Wie oben erläutert werden bei der Instrumentierung der Software SW1 mit dem Computersystem HW1 die Prozessmessgrößen PROC(HW1;SW1;i) ermittelt. Hiermit lässt sich dann aufgrund der Kenntnis der Energiemodelle MODE(HWh) im Schritt S_CAL2 für jedes der Computersysteme HWh, d.h. insbesondere auch für h≠1, bspw. für h=2, der Energieverbrauch E(HWh;SW1) abschätzen, der zu erwarten ist, wenn die Software SW1 mit dem Computersystem HWh ausgeführt wird. Um also bspw. den Energieverbrauch E(HW2;SW1) abzuschätzen, der entsteht, wenn die Software SW1 mit dem Computersystem HW2 ausgeführt wird, werden die vorab mit HW1 ermittelten Prozessmessgrößen PROC(HW1;SW1;i) dem Energiemodell MODE(HW2) zugeführt, welches daraufhin seinerseits den Energieverbrauch E(HW2;SW1) liefert.

Im Detail wird also zur Ermittlung des bei Ausführung der Software SW1 mit einem zweiten HW2 der Computersysteme HWh zu erwartenden Energieverbrauchs E(HW2;SW1) in einem ersten Schritt S_21 die Software SW1 zur Bestimmung der Prozessmessgrößen PROC(HW1;SW1;i) mit bzw. auf einem ersten HW1 der Computersysteme HWh instrumentiert. In einem zweiten Schritt S_22 werden die so bestimmten Prozessmessgrößen PROC(HW1;SW1;i) dem Energiemodell MODE(HW2) des zweiten Computersystems HW2 als Eingangswerte IN=PROC(HW1;SW1;i) zugeführt. In einem dritten Schritt S_23 erzeugt das Energiemodell MODE(HW2) des zweiten Computersystems HW2 als Reaktion auf diese Eingangswerte IN eine Energieaussage und gibt diese aus, welche repräsentiert, wie groß der Energieverbrauch E(HW2;SW1) des zweiten Computersystems HW2 bei der Ausführung der Software SW1 ist.

Dieser zweite Aspekt der Erfindung adressiert also das Vorgehen, bei dem die Software SW1, deren zu erwartender Energieverbrauch E(HW2;SW1) auf dem zweiten Computersystem HW2 ermittelt werden soll, auf dem quasi als Referenzsystem oder auch als Prüfstand fungierenden ersten Computersystem HW1 instrumentiert wird. E(HW2;SW1) wird dann bestimmt, indem die resultierenden Prozessmessgrößen PROC(HW1;SW1;i) dem Energiemodell MODE(HW2) des zweiten Computersystems HW2 zugeführt werden. Mit diesem Ansatz kann also für ein beliebiges Computersystem HW2 aus der Vielzahl H von Computersystemen HWh, deren Energiemodelle bekannt sind, eine Energievorhersage getroffen werden, die angibt, welcher Energieverbrauch die Ausführung der SW1 auf diesem beliebigen Computersysteme HW2 bewirken würde, ohne dass die Software SW1 auf dem jeweiligen Computersystem HW2 selbst instrumentiert wird.

Der zweite Aspekt der Erfindung nutzt in einer ersten Näherung aus, dass die Ausführungen der Software SW1 mit den verschiedenen Computersystemen HW1, HW2 im Wesentlichen dieselben Prozessmessgrößen PROC(HWh;SW1;i) bewirken würden, d.h. PROC(HW2;SW1;i)≈PROC(HW1;SW1;i). Dabei kann eine akzeptable Abweichung bspw. 10-20% betragen. Für den Fall, dass die Abweichung für eine bestimmte Prozessmessgröße, d.h. für ein bestimmtes i, größer ist, kann für diese Prozessmessgröße wie unten beschreiben eine Modellierung verwendet werden. Konsequenterweise muss die Software SW1 nicht extra auf dem zweiten Computersystem HW2 instrumentiert werden, wenn der Energieverbrauch E(HW2;SW1) ermittelt werden soll. Vielmehr kann die Software SW1 mit dem Referenzsystem HW1 instrumentiert werden und mit den resultierenden Prozessmessgrößen PROC(HW1;SW1;i) können mithilfe jedes beliebigen Energiemodells MODE(HWh) der anderen Computersysteme HWh die jeweils zu erwartenden Energieverbräuche E(HWh;SW1) mit ausreichender Genauigkeit bestimmt werden. In der obigen Ausführung drückt die Formulierung "im Wesentlichen dieselben Prozessmessgrößen" aus, dass die jeweiligen Prozessmessgrößen so ähnlich sind, dass die Energieverbräuche E(HWh;SW1) mit dieser "ausreichenden Genauigkeit" bestimmt werden können.

Bspw. mit Blick auf eine mögliche Prozessmessgröße PROC(HW;SW1;i) "Rechenschritte bei Ausführung der Software SW1" kann davon ausgegangen werden, dass, wenn die Ausführung der Software SW1 mit dem ersten Computersystem HW1 ST1=1000 Rechenschritte bewirkt, auch mit dem zweiten Computersystem HW2 ca. ST2=1000 Rechenschritte zu erwarten sind. Für den Fall, dass es sich bei einer anderen Prozessmessgröße PROC(HW;SW1;i') anders verhält, d.h. PROC(HW2;SW1;i')#PROC(HW1;SW1;i'), wobei die Abweichung bspw. >20% wäre, ist es möglich, die bereits erwähnte Modellierung ML(HW1;HW2;i') anzuwenden, die beschreibt, wie sich die Prozessmessgrößen PROC(HW1;i'), PROC(HW2;i') für verschiedene Computersysteme HW1, HW2 zueinander verhalten. Die Modellierungen ML können bspw. im Rahmen der Bestimmung der Energiemodelle MODE ermittelt werden. Mit Hilfe einer derartigen Modellierung ML(HW1;HW2;i') können die bei der Instrumentierung der Software SW1 auf dem Computersystem HW1 ermittelten Prozessmessgrößen PROC(HW1;SW1;i) vor der Anwendung mit dem Energiemodell MODE(HW2) des anderen Computersystems HW2 korrigiert werden, resultierend in angepassten Prozessmessgrößen PROC'(HW1;SW1;i), so dass die Anwendung der angepassten Prozessmessgrößen PROC'(HW1;SW1;i) mit dem Energiemodell MODE(HW2) den Energieverbrauch E(HW2;SW1) mit ausreichender Genauigkeit liefert. Ein Beispiel hierfür könnte sein, dass das zweite Computersystem HW2 andere, bspw. kleinere Cache-Größen hat als das erste Computersystem HW1. In dem Fall ist nicht auszuschließen, dass bei der Ausführung der Software SW1 auf dem zweiten Computersystem HW2 eine größere Anzahl von sog. "Cache-Misses" auftritt als bei der Ausführung mit dem ersten Computersystem HW1. Dabei beschreibt ein "Cache-Miss" die Situation, in der ein Wert nicht im Cache abgelegt, sondern nachgeladen werden muss.

In dem Fall, dass eine solche Abweichung der Prozessmessgrößen zu erwarten ist, werden also zur Ermittlung des bei Ausführung der gegebenen Software SW mit einem zweiten HW2 der Computersysteme HWh zu erwartenden Energieverbrauchs E(HW2;SW) die im ersten Schritt S_21 bestimmten Prozessmessgrößen PROC(HW1;SW;i) vor der Ausführung des zweiten Schrittes anhand der vorab bestimmten Modellierung ML(HW1;HW2;i) angepasst, resultierend in den Prozessmessgrößen PROC'(HW1;SW;i). Im zweiten Schritt S_22 werden die angepassten Prozessmessgrößen PROC'(HW1;SW;i) dem Energiemodell MODE(HW2) als Eingangswerte IN=PROC'(HW1;SW;i) zugeführt, so dass das Energiemodell MODE(HW2) des zweiten Computersystems HW2 im dritten Schritt S_23 als Reaktion auf diese Eingangswerte IN die Energieaussage erzeugt und ausgibt, welche repräsentiert, wie groß der Energieverbrauch E(HW2;SW) des zweiten Computersystems HW2 bei der Ausführung der Software SW ist.

Die Kombination des ersten und des zweiten Aspektes der Erfindung führt nun dazu, dass für eine jede Software SW, deren Prozessmessgrößen PROC mit zumindest einem Computersystem HW1 aus einer Vielzahl H von Computersystemen HWh bestimmt wurden, deren Energiemodelle MODE(HWh) bekannt sind, der Energieverbrauch E(HWh;SW) bestimmt werden kann, der zu erwarten ist, wenn die Software SW mit dem Computersystem HWh ausgeführt wird.

Um das Energiemodell MODE(HW1) für ein bestimmtes Computersystem HW1 zu bestimmen, wird ein definierter Benchmark BEN auf diesem Computersystem HW1 ausgeführt, um für diesen Benchmark BEN die Prozessmessgrößen PROC(HW1;i) zu ermitteln. Dabei wird die Energie bzw. der Energieverbrauch des Computersystems HW1 gemessen, so dass ein Zusammenhang zwischen den Prozessmessgrößen PROC(HW1;i) und dem Energieverbrauch bestimmt wird. Zur Messung des Energieverbrauchs können übliche Verfahren zum Einsatz kommen, die die jeweils verbrauchte Energie bspw. in Joule ermitteln. Das Ausführen des Benchmarks BEN bedeutet, dass eine Vielzahl B von unterschiedlichen Benchmarkmessungen BEN(b) mit b=1,...,B mit dem Computersystem HW1 ausgeführt wird, um eine große Varianz von Fällen, die bei einer Operation auftreten können, abzudecken, um zuordnen zu können, welche Operationen welche Energie benötigen.

Das Energiemodell MODE(HW1) des Computersystems HW1 wird also in einem Verfahren METH_MOD vorab und typischerweise universell, d.h. unabhängig von der später interessierenden Software SW, ermittelt. Hierzu wird, wie in FIG 4 dargestellt, in einem Schritt S_BEN des Verfahrens METH_MOD zunächst der erwähnte Benchmark BEN umfassend eine oder mehrere Benchmarkmessungen BEN(b) mit dem Computersystem HW1 ausgeführt. Bei jeder der Benchmarkmessungen BEN(b) wird zum einen jeweils der dabei aufgewendete Energieverbrauch E(b) gemessen, wie oben angedeutet mit einem an sich üblichen Verfahren, wobei darauf zu achten ist, dass nur der durch die Ausführung der Software SW bewirkte Energieverbrauch, nicht aber sonstiger Systemverbrauch berücksichtigt wird. Zum anderen werden die Prozessmessgrößen PROC(HW1;i) ermittelt. Zu diesem Zweck sind diverse Ansätze verfügbar, die einen einfachen Zugang zum jeweiligen System HWh bieten, sog. "Performance Monitoring Counter" (PMC) auszulesen, bspw. über das "Performance Application Programming Interface" (PAPI). In der Praxis können ggf. nicht beliebig viele PMCs auf einmal gemessen werden, weswegen die Instrumentierung der Software bzw. der Benchmark auf mehrere Durchgänge verteilt werden muss, wobei je Durchgang immer nur eine Teilmenge von PMCs bestimmt wird, bis alle gewünschten Prozessmessgrößen ermitelt sind. Das baut darauf, dass sich bei jeder Wiederholung die Programmablaufeigenschaft nicht allzu stark ändert, d.h. der Vorgang möglichst reproduzierbar ist.

Ggf. sind jedoch, je nach Ausprägung der jeweiligen Benchmarkmessung BEN(b), nicht alle Prozessmessgrößen PROC(HW1;i) betroffen, d.h. es werden zumindest die von der jeweiligen Benchmarkmessung BEN(b) betroffenen Messgrößen PROC(HW1;i(b)) der Hardware HW1 ermittelt.

Das Energiemodell MODE(HW1) wird in einem daran anschließenden Schritt S_MOD des Verfahrens METH_MOD anhand der somit ermittelten Zusammenhänge zwischen den betroffenen Prozessmessgrößen PROC(HW1;i(b)) und den Energieverbräuchen E(b) gebildet.

Zur Bildung des Energiemodells MODE(HW1) im Schritt S_MOD kann bspw. ein entsprechend konfiguriertes künstliches neuronales Netzwerk KNN zum Einsatz kommen, welches mit den in den einzelnen Benchmarkmessungen BEN(b) aufgenommenen Daten E(b) und PROC(HW1;i(b)) in an sich bekannter Art und Weise trainiert wird.

Der Benchmark BEN deckt idealerweise jegliche vom jeweiligen Computersystem HWh erwartbare Operation ab:

Bspw. kann bei einer Messung BEN(1) der Benchmarkmessungen BEN(b) ein blockweises Kopieren unterschiedlich großer Datenmengen ausgeführt werden, woraus ein Energieverbrauch E(1) für Hauptspeicher- und Datencache-Zugriffe bei Cache-Hits ableitbar ist. Diese Messung BEN(1) bspw. ein Kopieren von einem ersten Adressbereich des Hauptspeichers in einen zweiten umfassen, wobei bspw. alle Daten von einer Speicheradresse 0x1000000 bis 0x1001000 an eine andere Speicheradresse 0x2000000 bis 0x2001000 kopiert werden.

Bei einer weiteren Messung BEN(2) der Benchmarkmessungen BEN(b) kann zusätzlich oder alternativ dazu ein byteweises Kopieren durch Pseudozufallszahlen ausgewählter Speicheradressen ausgeführt werden, woraus ein Energieverbrauch E(2) für Datencache-Zugriffe bei Cache-Misses ableitbar ist. Dies kann ähnlich wie das Kopieren bei der Messung BEN(1) ausgebildet sein, nur dass kein zusammenhängender Bereich kopiert wird, sondern der Inhalt vieler einzelner, ggf. verstreuter Speicheradressen auf andere verstreute Speicheradressen.

Bei einer weiteren Messung BEN(3) der Benchmarkmessungen BEN(b) kann zusätzlich oder alternativ dazu eine Berechnung eines kryptografischen Hashes von Pseudozufallsdaten ausgeführt werden, woraus ein Energieverbrauch E(3) von derartigen Berechnungen ableitbar ist.

Bei einer weiteren Messung BEN(4) der Benchmarkmessungen BEN(b) kann zusätzlich oder alternativ dazu eine Berechnung eines gleitenden Mittelwerts und/oder eines Produkts bspw. der Einträge eines langen Vektors von Zufallszahlen ausgeführt werden, woraus ein Energieverbrauch E(5) aufgeschlüsselt nach Art der Operation, bspw. Addition oder Multiplikation, oder nach dem Zahlenformat, bspw. integer oder floating point, ableitbar ist.

Bei einer weiteren Messung BEN(5) der Benchmarkmessungen BEN(b) können zusätzlich oder alternativ dazu Berechnungen mittels einer GPU des Computersystems HW1 ausgeführt werden, woraus ein Energieverbrauch E(5) für eine Beschleunigerkarte der Hardware HW1 ableitbar ist. Hierbei können dieselben Benchmarks ermittelt werden, die auch für die CPU herangezogen werden.

Bei einer weiteren Messung BEN(6) der Benchmarkmessungen BEN(b) kann zusätzlich oder alternativ dazu ein Speichern und Laden von Daten auf und/oder von der Speichereinrichtung 120 des Computersystems HW1 ausgeführt werden, woraus ein Energieverbrauch E(6) für einen Zugriff auf die Speichereinrichtung 120 ableitbar ist. Dabei ist es nicht relevant, welche Daten hierzu verwendet werden, bspw. eine Folge von Pseudozufallszahlen zum Einsatz kommen. Wie oben sind mehrere Tests mit unterschiedlich großer Datenmenge denkbar.

Bei einer weiteren Messung BEN(7) der Benchmarkmessungen BEN(b) kann zusätzlich oder alternativ dazu ein Senden und/oder Empfangen von Daten über ein Netzwerk ausgeführt werden, mit dem das Computersystem HW1 ggf. verbunden ist, woraus ein Energieverbrauch E(7) für Datenübertragungen ableitbar ist, welcher ggf. nach "Senden" E(7_1) und "Empfangen" E(7_2) aufgeschlüsselt sein kann. Hierbei ist jede Art von Netzwerk geeignet, bspw. ein LAN oder ein WIFI.

Je nachdem, wie ein jeweiliges Computersystem HWh ausgebildet ist, d.h. welche Komponenten es umfasst, mit welchen externen Komponenten es ggf. verbunden ist, bspw. Sensorsysteme und/oder Ein-/Ausgabegeräte etc., und in welche Netzwerkarchitektur es ggf. eingebunden ist, bieten sich zusätzliche Benchmarkmessungen an, so dass weitere Belastungstests jeweils bei gleichzeitiger Ermittlung der Energieverbräuche E(b) und Prozessmessgrößen PROC(HWh;i(b)) ausgeführt werden können, die die Realitätsnähe bzw. die Genauigkeit der Energieabschätzung des Energiemodells MODE(HWh) weiter verbessern.

Im Rahmen der beschriebenen Bestimmung der Energiemodelle MODE(HWh), aber generell auch unabhängig davon, können auch die oben eingeführten optionalen Modellierungen ML(HW1;HW2;i) ermittelt werden. Die Benchmarks BEN liefern wie beschrieben für jedes Computersystem HWh Informationen über die Prozessmessgrößen PROC(HWh;i). Davon ausgehend, dass derselbe Benchmark BEN für verschiedene Computersysteme HW1, HW2 ausgeführt wird, kann aus einem Vergleich der jeweils ermittelten Prozessmessgrößen PROC(HW1;i), PROC(HW2;i) abgeleitet werden, dass wie sich die Prozessmessgrößen PROC(HW1;i), PROC(HW2;i) zweier verschiedener Computersysteme HW1, HW2 zueinander verhalten. Wenn also, rein exemplarisch, beim jeweiligen Benchmark PROC(HW1;i=2)=1000 und PROC(HW2;i=2)=950 ermittelt und von einem linearen Zusammenhang ausgegangen wird, können diese Werte zueinander ins Verhältnis gesetzt werden, so dass die Modellierung ML(HW1;HW2;i=2) für diese Prozessmessgröße mit i=2 einen Wert ML(HW1;HW2;i=2)=950/1000=0,95 umfasst. In der Realität können die Zusammenhänge zwischen Prozessmessgrößen auch komplexer sein.

Der bis hierhin im Rahmen des ersten und des zweiten Aspekts der Erfindung vorgeschlagene Ansatz sieht also vor, den zu erwartenden Energieverbrauch E(HW;SW) für die Ausführung einer Software SW mit einem Computersystem HW unter Verwendung des Energiemodells MODE(HW) des Computersystems HW modellbasiert zu bestimmen. Das Energiemodell MODE(HW) wird vorab mit Hilfe des Benchmarks BEN ermittelt. Da es universell bzw. unabhängig von einer bestimmten auszuführenden Software ermittelt ist, kann es für jegliche beliebige interessierende Software SW eingesetzt werden, wenn deren Prozessmessgrößen PROC bekannt sind. Zur Ermittlung des Energieverbrauchs E(HW;SW) reicht es aus, die interessierende Software SW einmal auszuführen und dabei die Prozessmessgrößen PROC(HW;SW;i) zu ermitteln. Letztere werden dem Energiemodell MODE(HW) zugespielt, welches daraufhin den zu erwartenden Energieverbrauch E(HW;SW) ausgibt.

Der somit vorherzusagende Energieverbrauch E(HW;SW) bei Ausführung der Software SW mit dem Computersystem HW kann verwendet werden, um die Software SW zu bewerten, indem der zugehörige Energieverbrauch E(HW;SW) bei der Ausführung der bestimmten Software SW bewertet wird. Im Rahmen einer Optimierung kann in einem ersten Ansatz untersucht werden, ob die Ausführung derselben Software SW mit unterschiedlichen Computersystemen HW1, HW2, HW3 unterschiedliche Energieverbräuche E(HW1;SW), E(HW2;SW), E(HW3;SW) erwarten lässt, ob also bspw. eine Ausführung in der Cloud HW1, auf einem Edge-Gerät HW2 oder aber mit einem anderen Computersystem HW3 zu einem geringeren Energieverbrauch führt. Je nachdem, mit welchem Computersystem HW1, HW2, HW3 der Energieverbrauch am geringsten ist, würde die Software SW in der Folge mit dem entsprechenden Computersystem HW1, HW2 oder HW3 ausgeführt. Hierzu wird also in einer Testphase der Software SW für mehrere Computersysteme HW1, HW2, HW3 jeweils der bei der Ausführung der gegebenen Software SW zu erwartende Energieverbrauch E(HW1;SW), E(HW2;SW), E(HW3;SW) wie oben beschrieben ermittelt und ausgegeben. In einer daran anschließenden Nutzungsphase der Software SW wird diese mit demjenigen der Computersysteme HW1, HW2, HW2 ausgeführt, für das in der Testphase der geringste zu erwartende Energieverbrauch E(HW1;SW), E(HW2;SW), E(HW3;SW) ermittelt wurde.

Im Rahmen der Optimierung kann in einem zweiten Ansatz alternativ oder zusätzlich zum oben vorgeschlagenen ersten Ansatz die Software SW selbst optimiert werden, insbesondere bezüglich deren Ausführung mit dem Computersystem HW1, um den Energieverbrauch E(HW1;SW) zu reduzieren. Dies macht sich zunutze, dass zum einen für das Computersystem HW1 die Einflüsse der Prozessmessgrößen PROC(HW;i) auf den Energieverbrauch E(HW1;SW) aus dem Energiemodell MODE(HW1) bekannt sind und zum anderen für die Software SW aus deren Instrumentierung auf dem Computersystem HW1 ableitbar und somit bekannt ist, wie die Ausführung der Software SW auf die Prozessmessgrößen PROC(HW1;SW;i) wirkt. Es wird also die Software SW für das Computersystem HW1 unter Berücksichtigung des Energiemodells MODE(HW1) des Computersystems HW1 dahingehend optimiert, dass eine Ausführung der Software SW mit dem Computersystem HW1 einen minimalen Energieverbrauch bewirkt. Für den Fall, dass die Software SW mit mehreren Computersystemen HW1,... ,HWN ausgeführt werden soll, kann die Software SW für diese Vielzahl von Computersystemen HW1,...,HWN unter Berücksichtigung der Energiemodelle MODE(HW1),...,MODE(HWN) dieser Computersysteme HW1,...,HWN dahingehend optimiert werden, dass eine Ausführung der Software SW mit den Computersystemen HW1,...,HWN einen minimalen Gesamtenergieverbrauch EGES bewirkt, wobei der Gesamtenergieverbrauch EGES die Summe der Energieverbräuche E(HW1;SW),...,E(HWN;SW) der einzelnen Computersysteme HW1,...,HWN ist. Für die Optimierung wird die Software SW zunächst auf dem Computersystem HW1 instrumentiert, um die Prozessmessgrößen PROC(HW1;SW;i) für die Ausführung der Software SW mit dem Computersystem HW1 zu bestimmen. Hieraus lässt sich eine Abhängigkeit Z1 der Prozessmessgrößen PROC(HW1;SW;i) von der Software SW ableiten. Desweiteren wird aus dem vorab bestimmten Energiemodell MODE(HW1) eine Abhängigkeit Z2 zwischen Prozessmessgrößen PROC und Energieverbrauch E und damit der Einfluss der Prozessmessgrößen auf den Energieverbrauch des Computersystems HW1 abgeleitet. Dabei können insbesondere die Daten der Benchmarkmessungen BEN(j) verwendet werden, d.h. die genannte Abhängigkeit Z2 wird aus den bei den Benchmarkmessungen BEN(j) aufgenommenen Daten umfassend die Prozessmessgrößen PROC(HW1;i(j)) und die jeweiligen Energieverbräuche E(j) abgeleitet. Nachdem Z1 repräsentiert, welchen Einfluss die Software SW auf die Prozessmessgrößen hat, und Z2 zeigt, wie die Prozessmessgrößen ihrerseits mit dem Energieverbrauch zusammenhängen, kann in einem Folgeschritt aus den Abhängigkeiten Z1, Z2 die Abhängigkeit Z0 des Energieverbrauchs E(HW1;SW) von der Software SW abgeleitet werden. Schließlich kann basierend auf der Kenntnis der Abhängigkeit Z0 die Software SW für die Ausführung auf dem Computersystem HW1 dahingehend optimiert werden, dass der Energieverbrauch E(HW1;SW) minimal wird.

Als Prozessmessgrößen PROC(HW;i)=m(i) können bspw. die im Zusammenhang mit dem "Performance Application Programming Interface" (PAPI) genannten Größen zum Einsatz kommen. Als Basis für das Energiemodell MODE(HW) für ein Computersystem HW kann bspw. ein lineares Modell mit Features f(k) vorgesehen sein, welches auf den polynomialen Kombinationen der verschiedenen Prozessmessgrößen m(i) aufbaut. Dabei kann bspw. gelten f(1) =m(1), f(2)=m(2), f(3)=m(3),..., f(a)=m(1)*m(1), f(a+1)=m(1)*m(2), f(a+2)=m(1)*m(3),..., f(b)=m(1)*m(1)*m(1), f(b+1) =m(1)*m(1)*m(2), f(b+2)=m(1)*m(1)*m(3) etc. Für das Modell MODE selbst kann dann gelten

$$\mathrm{MODE} = PARA(0) + \sum_{a=1}^{n}(PARA(a) * \mathrm{f(a)}).$$

Wie bereits angedeutet wird zur Modellerstellung der Benchmark BEN zumindest einfach, idealerweise aber mehrfach (K) ausgeführt, wobei ggf. Rechenlasten und/oder Datenmengen bei unterschiedlichen Ausführungen variiert werden können. Bei K-facher Ausführung des Benchmarks BEN ergeben sich K Paare von Energiewert E und Prozessmessgrößen m(i;j). Daraus lassen sich die Parameter PARA(a) des Modells MODE folgendermaßen berechnen:

$$\begin{bmatrix} PARA(0) \\ \vdots \\ PARA(n) \end{bmatrix} = \left(\mathrm{F}^{\mathrm{T}}\mathrm{F}\right)^{-1}\mathrm{F}^{\mathrm{T}} \begin{bmatrix} \mathrm{E(1)} \\ \vdots \\ \mathrm{E(k)} \end{bmatrix} \text{ mit } \mathrm{F} = \begin{bmatrix} 1 & \mathrm{m(1;1)} & \dots & \mathrm{m(1;n)} \\ \vdots & \vdots & \ddots & \vdots \\ 1 & \mathrm{m(k;1)} & \dots & \mathrm{m(k;n)} \end{bmatrix}$$

Auch wenn die vorliegende Erfindung unter Bezugnahme auf konkrete Ausführungsformen beschrieben wurde, versteht es sich, dass diverse Änderungen und Modifikationen an den beschriebenen Ausführungsformen vorgenommen werden können, ohne den Bereich der erfinderischen Idee zu verlassen. Die vorstehende Beschreibung sollte als veranschaulichend und nicht als einschränkend angesehen werden und so, dass sämtliche Äquivalente und/oder Kombinationen von Ausführungsformen von der Beschreibung umfasst sind. Somit ist die Erfindung nicht auf die oben dargestellten Ausführungsformen beschränkt, vielmehr können von einer Fachperson Variationen abgeleitet werden, ohne vom Umfang der Erfindung abzuweichen.

**Patentansprüche**

1. Computerimplementiertes Verfahren zur Bewertung einer Software SW, wobei zur Bewertung ein bei einer Ausführung der gegebenen Software SW durch ein bestimmtes Computersystem HW1 aus einer Anzahl $H \geq 1$ von Computersystemen HWh mit h=1,...,H zu erwartender Energieverbrauch E(HW1;SW) ermittelt und ausgegeben wird, wobei

   - die Ermittlung des Energieverbrauchs E(HW1;SW) modellbasiert anhand eines für das bestimmte Computersystem HW1 spezifischen Energiemodells MODE(HW1) und basierend auf einer oder mehreren Prozessmessgrößen PROC(HW1;SW;i) mit i=1,...,I resultierend aus einer Ausführung der Software SW auf dem Computersystem HW1 erfolgt, und
   - das Energiemodell MODE(HW1) derart vorab bestimmt ist, dass es als Reaktion auf eine Eingabe der Prozessmessgrößen PROC(HW1;SW;i) den Energieverbrauch E(HW1;SW) ausgibt.

2. Verfahren nach Anspruch 1, **dadurch gekennzeichnet, dass** die Prozessmessgrößen PROC(HWh;SW;i) Messgrößen sind, die Häufigkeiten von Operationen des jeweiligen Computersystems HWh und/oder Betriebszustände von Komponenten des jeweiligen Computersystems HWh bei der Ausführung der Software SW repräsentieren.

3. Verfahren nach einem der Ansprüche 1 bis 2, **dadurch gekennzeichnet, dass** zur Ermittlung des Energieverbrauchs E(HWh;SW)

   - in einem Schritt S_EXE1 die gegebene Software SW zur Bestimmung der Prozessmessgrößen PROC(HWh;SW;i) auf dem jeweiligen Computersystem HWh instrumentiert wird,
   - die so bestimmten Prozessmessgrößen PROC(HWh;SW;i) dem Energiemodell MODE(HWh) als Eingangswerte zugeführt werden,
   - in einem Schritt S_CAL1 das Energiemodell MODE(HWh) als Reaktion auf die Eingangswerte PROC(HWh;SW;i) eine Energieaussage erzeugt und ausgibt, welche repräsentiert, wie groß der Energieverbrauch E(HWh;SW) des Computersystems HWh bei der Ausführung der Software SW ist.

4. Verfahren nach einem der Ansprüche 1 bis 3, **dadurch gekennzeichnet, dass** für eine Vielzahl H>1 von Computersystemen HWh die Energiemodelle MODE(HWh) bekannt sind, wobei zur Ermittlung des bei Ausführung der gegebenen Software SW mit einem zweiten HW2 der Computersysteme HWh zu erwartenden Energieverbrauchs E(HW2;SW)

   - in einem ersten Schritt S_EXE2 die gegebene Software SW zur Bestimmung der Prozessmessgrößen PROC(HW1;SW;i) auf einem ersten HW1 der Computersysteme HWh instrumentiert wird,
   - in einem zweiten Schritt S_22 die so bestimmten Prozessmessgrößen PROC(HW1;SW;i) dem Energiemodell MODE(HW2) des zweiten Computersystems HW2 als Eingangswerte IN=PROC(HW1;SW;i) zugeführt werden,
   - in einem dritten Schritt S_CAL2 das Energiemodell MODE(HW2) des zweiten Computersystems HW2 als Reaktion auf diese Eingangswerte IN eine Energieaussage erzeugt und ausgibt, welche repräsentiert, wie groß der Energieverbrauch E(HW2;SW) des zweiten Computersystems HW2 bei der Ausführung der Software SW ist.

5. Verfahren nach Anspruch 4, **dadurch gekennzeichnet, dass**

   - die im ersten Schritt S_EXE2 bestimmten Prozessmessgrößen PROC(HW1;SW;i) vor der Ausführung des zweiten Schrittes anhand einer vorab bestimmten Modellierung ML(HW1;HW2;i), welche beschreibt, wie sich die Prozessmessgrößen PROC(HW1;i), PROC(HW2;i) für verschiedene Computersysteme HW1, HW2 zueinander verhalten, resultierend in Prozessmessgrößen PROC'(HW1;SW;i) angepasst werden,
   - im zweiten Schritt S_22 die angepassten Prozessmessgrößen PROC'(HW1;SW;i) dem Energiemodell MODE(HW2) als Eingangswerte IN=PROC'(HW1;SW;i) zugeführt werden,
   - im dritten Schritt S_CAL2 das Energiemodell MODE(HW2) des zweiten Computersystems HW2 als Reaktion auf diese Eingangswerte IN die Energieaussage erzeugt und ausgibt, welche repräsentiert, wie groß der Energieverbrauch E(HW2;SW) des zweiten Computersystems HW2 bei der Ausführung der Software SW ist.

6. Verfahren nach Anspruch 5 und einem der Ansprüche 8 bis 9, **dadurch gekennzeichnet, dass** für die Modellierung ML(HW1;HW2;i) für jedes i die bei der Ermittlung der Energiemodelle MODE(HW1), MODE(HW2) ermittelten Prozessmessgrößen PROC(HW1;i), PROC(HW2;i) miteinander verglichen werden, so dass ein jeweiliger Wert ML(HW1;HW2;i)=f(PROC(HW1;i);PROC(HW2;i).) eine Funktion f der ermittelten Prozessmessgrößen ist.

7. Verfahren nach einem der Ansprüche 1 bis 6, **dadurch gekennzeichnet, dass** das Energiemodell MODE(HWh) für ein jeweiliges Computersystem HWh ermittelt wird, indem

   - ein Benchmark BEN umfassend eine oder mehrere Benchmarkmessungen BEN(b) mit dem jeweiligen Computersystem HWh ausgeführt wird, wobei bei jeder Benchmarkmessung BEN(b)
   - der dabei aufgewendete Energieverbrauch E(b) gemessen und
   - zumindest die von der jeweiligen Benchmarkmessung BEN(b) betroffenen Messgrößen PROC(HWh;i(b)) der Prozessmessgrößen PROC(HWh;i) des Computersystems HWh ermittelt werden,
   - die damit ermittelten Zusammenhänge zwischen den betroffenen Prozessmessgrößen PROC(HWh;i(b)) und den Energieverbräuchen E(b) das Energiemodell MODE(HWh) bilden.

8. Verfahren nach Anspruch 7, **dadurch gekennzeichnet, dass**

   - eine BEN(1) der Benchmarkmessungen BEN(j) ein blockweises Kopieren unterschiedlich großer Datenmengen umfasst,
   und/oder
   - eine BEN(2) der Benchmarkmessungen BEN(j) ein byteweises Kopieren durch Pseudozufallszahlen ausgewählter Speicheradressen umfasst,
   und/oder
   - eine BEN(3) der Benchmarkmessungen BEN(j) eine Berechnung eines kryptografischen Hashes von Pseudozufallsdaten umfasst,
   und/oder
   - eine BEN(4) der Benchmarkmessungen BEN(j) eine Berechnung eines gleitenden Mittelwerts und/oder eines Produkts umfasst,
   und/oder
   - eine BEN(5) der Benchmarkmessungen BEN(j) Berechnungen mittels einer GPU des Computersystems HW umfasst,
   und/oder
   - eine BEN(6) der Benchmarkmessungen BEN(j) ein Speichern und Laden von Daten auf und/oder von einer Speichereinrichtung (120) des Computersystems HW umfasst, und/oder
   - eine BEN(7) der Benchmarkmessungen BEN(j) ein Senden und/oder Empfangen von Daten über ein Netzwerk umfasst, mit dem das Computersystem HW verbunden ist,

9. Verfahren nach einem der Ansprüche 1 bis 8, **dadurch gekennzeichnet, dass**

   - in einer Testphase S_TST der Software SW für mehrere Computersysteme HW1, HW2, HW3 jeweils der bei der Ausführung der gegebenen Software SW zu erwartende Energieverbrauch E(HW1;SW), E(HW2;SW), E(HW3;SW) ermittelt und ausgegeben wird,
   - die Software SW in einer Nutzungsphase S_NTZ der Software SW mit demjenigen der Computersysteme HW1, HW2, HW3 ausgeführt wird, für das in der Testphase S_TST der geringste zu erwartende Energieverbrauch E(HW1;SW), E(HW2;SW), E(HW3;SW) ermittelt wurde.

10. Verfahren nach einem der Ansprüche 1 bis 9, **dadurch gekennzeichnet, dass** die Software SW

   - für ein jeweiliges Computersystem HWh unter Berücksichtigung des jeweiligen Energiemodells MODE(HWh) dahingehend optimiert wird, dass eine Ausführung der Software SW mit diesem Computersystem HWh einen minimalen Energieverbrauch E(HWh;SW) bewirkt, oder
   - für eine Vielzahl von Computersystemen HW1,...,HWN unter Berücksichtigung der Energiemodelle MODE(HW1),...,MODE(HWN) dieser Computersysteme HW1,...,HWN dahingehend optimiert wird, dass eine Ausführung der Software SW mit den Computersystemen HW1,...,HWN einen minimalen Gesamtenergieverbrauch EGES bewirkt, wobei der Gesamtenergieverbrauch EGES die Summe der Energieverbräuche E(HW1;SW),...,E(HWN;SW) der einzelnen Computersysteme HW1,...,HWN ist.

11. Verfahren nach Anspruch 10, **dadurch gekennzeichnet, dass** zur Optimierung

- die Software SW zur Bestimmung der Prozessmessgrößen PROC(HWh;SW;i) für die Ausführung der Software SW mit dem Computersystem HWh auf dem Computersystem HWh instrumentiert wird und eine Abhängigkeit Z1 der Prozessmessgrößen PROC(HWh;SW;i) von der Software SW abgeleitet wird,
- aus dem Energiemodell MODE(HWh) ein Abhängigkeit Z2 zwischen Prozessmessgrößen PROC(HWh;i) und Energieverbrauch abgeleitet wird,
- aus den Abhängigkeiten Z1, Z2 eine Abhängigkeit Z0 des Energieverbrauchs E(HWh;SW) von der Software SW abgeleitet wird,
- die Software SW basierend auf der Abhängigkeit Z0 dahingehend optimiert wird, dass der Energieverbrauch E(HWh;SW) minimal wird.

12. Verfahren nach Anspruch 11, **dadurch gekennzeichnet, dass** die Abhängigkeit Z2 unter Verwendung der Daten der Benchmarkmessungen BEN(j) bestimmt wird, wobei die Abhängigkeit Z2 aus den bei den Benchmarkmessungen BEN(j) aufgenommenen Prozessmessgrößen PROC(HWh;i(j)) und den jeweiligen Energieverbräuchen E(j) abgeleitet wird.

13. Verfahren nach einem der Ansprüche 10 bis 12, **dadurch gekennzeichnet, dass** die für das Computersystem HWh optimierte Software SW auf dem Computersystem HWh installiert wird.

14. Computersystem HW, **dadurch gekennzeichnet, dass** eine für dieses Computersystem HW anhand eines Verfahrens nach einem der Ansprüche 10 bis 13 optimierte Software SW zur Ausführung auf dem Computersystem HW installiert ist.

15. Computerarchitektur (100) umfassend eine Vielzahl H von Computersystemen (110, 120, 130) HWh mit h=1,...,H und H≥2 zur Ausführung einer Software SW, **dadurch gekennzeichnet, dass** die Computerarchitektur (100) eingerichtet ist,

- in einem Verfahren nach Anspruch 9 dasjenige HWh' der Computersysteme HWh zu identifizieren, für das der geringste Energieverbrauch E(HW1;SW), E(HW2;SW), ... zu erwarten ist,
- die Software SW mit dem identifizierten Computersystem HWh' auszuführen.

FIG 1

HW1    HW2    HW3

FIG 2

METH

S_EXE1

PROC(HW1; SW; i)

S_CAL1 — MODE(HW1)

E(HW1; SW)

## FIG 3

METH

S_EXE2

PROC(HW1; SW1; i)

S_CAL2 — MODE(HW2)

E(HW2; SW1)

## FIG 4

METH_MOD

S_BEN

{E(j); PROC(HW1; i(j))}

S_MOD

MODE(HW1)

Europäisches
Patentamt

European
Patent Office

Office européen
des brevets

## EUROPÄISCHER RECHERCHENBERICHT

Nummer der Anmeldung

EP 24 19 4655

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 4 400 973 A1 (DEUTSCHE TELEKOM AG [DE]) 17. Juli 2024 (2024-07-17) * Zusammenfassung * * Absatz [0009] - Absatz [0036] * ----- | 1-15 | INV. G06F11/30 |
| X | D Economou ET AL: "Full-System Power Analysis and Modeling for Server Environments", , 18. Juni 2006 (2006-06-18), XP055262765, Gefunden im Internet: URL:https://rivoire.cs.sonoma.edu/research /pubs/economou.2006.mantis.mobs.pdf [gefunden am 2016-04-05] * Zusammenfassung * * Abbildung 2 * * Seite 1, linke Spalte, Zeile 1 - Seite 5, rechte Spalte, Zeile 31 * ----- | 1-15 | |
| X | CANUTO MAURO ET AL: "A Methodology for Full-System Power Modeling in Heterogeneous Data Centers", 2016 IEEE/ACM 9TH INTERNATIONAL CONFERENCE ON UTILITY AND CLOUD COMPUTING (UCC), ACM, 6. Dezember 2016 (2016-12-06), Seiten 20-29, XP033078034, DOI: 10.1145/2996890.2996899 [gefunden am 2017-03-17] * Zusammenfassung * * Abbildung 2 * * Seite 20, linke Spalte, Zeile 1 - Seite 26, rechte Spalte, Zeile 35 * ----- | 1-15 | RECHERCHIERTE SACHGEBIETE (IPC) G06F |

Der vorliegende Recherchenbericht wurde für alle Patentansprüche erstellt

| Recherchenort | Abschlußdatum der Recherche | Prüfer |
|---|---|---|
| Den Haag | 30. Januar 2025 | Wirtz, Hanno |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...............................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 24 19 4655

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-01-2025

| Im Recherchenbericht angeführtes Patentdokument | Datum der Veröffentlichung | Mitglied(er) der Patentfamilie | Datum der Veröffentlichung |
|---|---|---|---|
| EP 4400973 A1 | 17-07-2024 | KEINE | |

Für nähere Einzelheiten zu diesem Anhang : siehe Amtsblatt des Europäischen Patentamts, Nr.12/82

EPO FORM P0461